Europäisches Patentamt

European Patent Office

Office européen des brevets

(11) Numéro de publication: **0 222 953**
**A1**

## (12) DEMANDE DE BREVET EUROPEEN

(21) Numéro de dépôt: 85402136.7

(22) Date de dépôt: 06.11.85

(51) Int. Cl.⁴: **B01J 8/44**

(43) Date de publication de la demande:
27.05.87 Bulletin 87/22

(84) Etats contractants désignés:
BE CH DE FR GB IT LI NL SE

(71) Demandeur: **HAVAS INDUSTRIE CONSEIL ET MAINTENANCE**
**21 Bis rue du Bois Saint-Denis**
**F-94350 Villiers(FR)**

(72) Inventeur: **Striff, Alphonse**
**2 rue Corneille**
**F-67750 Vendenheim(FR)**

(74) Mandataire: **Lemoine, Michel et al**
**Cabinet Michel Lemoine et Bernasconi 13**
**Boulevard des Batignolles**
**F-75008 Paris(FR)**

(54) **Grille de lit fluidisé.**

(57) La sole ou grille est constituée totalement d'un matériau synthétique de type résine structuré et/ou chargée possédant une surface non usinée parfaitement lisse avec une dureté de l'ordre de 9 mohs, les éléments de grille présentant sensiblement une forme triangulaire.

Fig. 3

Fig. 4

## Grille de lit fluidisé.

La présente invention a trait à une grille ou sole de lit fluidisé.

Les grilles ou soles de lit fluidisé actuelles sont généralement réalisées en tôles d'acier ordinaire ou inoxydable munies de passages de gaz par perforation ou estampage et laminage. Ces grilles présentent un grand nombre d'inconvénients.

Ainsi le contact constant des particules peut créer une érosion diminuant la qualité de l'état de surface de la face supérieure de la grille ou, en variante, le contact avec les particules et/ou les gaz entraîne des réactions chimiques provoquant une dénaturation de la surface. Ces processus favorisent un colmatage du dessus de la grille.

En outre, suivant la température et/ou le degré d'humidité, il se crée facilement, notamment lors du démarrage lorsque les températures ne sont pas encore équilibrées, un point de rosée qui, humidifiant les particules, favorise le colmatage ainsi que le bouchage des perforations par les particules qui s'agglomèrent. La condensation facilite également l'attaque chimique de la grille.

Suivant la qualité des gaz et notamment de l'air de traitement, on risque un colmatage du dessous des grilles avec les mêmes conséquences et notamment un colmatage ou un bouchage des perforations ou passages de la grille.

Le colmatage ou le bouchage implique une diminution des capacités d'échange du lit fluidisé et nécessite des arrêts fréquents de l'installation pour le nettoyage et, pendant le fonctionnement, entraîne une diminution progessive de la production ainsi que l'efficacité de l'installation de lit fluidisé, qu'il s'agisse du refroidissement, du séchage ou de la calcination.

Par ailleurs, les variations locales de fonctionnement, notamment en raison des causes précitées, par la variation du pourcentage de la granulométrie du produit diminuent le degré d'homogénéité du lit fluidisé. Il se forme alors des cratères par effet de reconstitution granulométrique, ce qui entraîne des différences notables dans l'homogénéité du produit final du point de vue du refroidissement, du séchage ou de la calcination.

En outre, les inégalités de répartition de l'air sous la grille, tributaires de nombreux facteurs, créent des modifications locales de fonctionnement avec les mêmes inconvénients, notamment du point de vue de l'homogénéité, les différentes causes de mauvais fonctionnements précitées ayant tendance à se favoriser mutuellement.

L'air chaud amené sous la grille provoque, par ailleurs, une dilatation immédiate et différentielle de la grille, notamment dans les zones de fixation, d'où mauvaise fluidisation, avancement du produit, favorisation du colmatage et même rupture des fixations.

On a déjà imaginé de réaliser des grilles métalliques munies d'un enrobage de polytétrafluoréthylène. L'expérience a cependant montré que ces lits n'échappent à aucun des inconvénients précités même si, initialement, leur fonctionnement peut paraître plus satisfaisant.

On a également déjà proposé de réaliser des grilles de lit de fluidisation en bois, les éléments de bois étant supportés par des éléments métalliques tels que des fers cornières, la surface supérieure des éléments en bois étant revêtue d'un vernis. Ces grilles fonctionnent mieux que les grilles métalliques usuelles mais ont encore tendance à se colmater, notamment par le dessous. Elles n'empêchent pas la formation de points de rosée et, partant, d'humidité qui finit par provoquer également un colmatage ou un bouchage par le dessus. Par ailleurs, la détérioration progressive de la surface de la grille finit par favoriser l'accrochage des particules, source de colmatage ou de bouchage. On constate, en outre, que ces inconvénients s'accroissent avec le temps malgré les avantages que le bois présente par rapport aux grilles purement métalliques. Enfin les grilles en bois sont coûteuses et relativement fragiles.

La présente invention se propose de remédier à ces inconvénients et de fournir une grille de lit fluidisé évitant le colmatage et le bouchage des passages d'air, aussi bien sur le dessus que sur le dessous, conservant une parfaite homogénéité de fonctionnement et ceci dans tous les domaines de température prévus pour l'installation.

Un autre objectif de l'invention est de réaliser une telle grille qui ne nécessite pratiquement pas d'arrêt en vue du nettoyage et qui conserve ses qualités de façon constante.

L'invention a pour objet une sole ou grille de lit fluidisé, caractérisée en ce qu'elle est constituée à base d'un matériau synthétique de type résine, de préférence structuré et/ou chargé, possédant une surface non usinée parfaitement lisse, une dureté supérieure à 7 mohs, de préférence de l'ordre de 9 mohs.

La résine est de préférence de type bisphénol A et/ou bisphénol F, ou novolac époxydé et cycloaliphatique, ou leurs mélanges.

De façon avantageuse, ces résines sont durcies à l'aide de durcisseurs à base d'amine, amide et assimilés, composés aminés anhydridés et durcisseurs catalytiques.

La grille est avantageusement réalisée à partir d'éléments préimprégnés ou stratifiés de fibres notamment de carbone ou de bore ou de verre ou d'aramide.

De façon avantageuse, la résine est chargée de charge minérale ou organique à granulométrie étagée,de préférence comprise entre 20µ et 1500µ.

L'invention a également pour objet des grilles ou soles de lit fluidisé, caractérisées en ce qu'elles sont constituées principalement, et de préférence totalement, d'une céramique possédant une tenue en température allant jusqu'à 1000°C et au-delà.

Les grilles selon l'invention sont, de préférence, réalisées sous forme d'éléments parallèles présentant une paroi supérieure horizontale et des parois latérales qui convergent l'une vers l'autre vers le bas, par exemple à la façon d'un trianlge ou d'un Y.

Ces éléments peuvent éventuellement comprendre une armature inférieure, par exemple métallique. Cette armature peut, par exemple, consister en un fer cornière présentant son sommet vers le bas et ouvert en haut, pour être intégralement rempli de résine durcie. Cependant, de préférence, l'élément en résine ou en céramique est réalisé d'un seul tenant sans armature. Dans le cas où on utilise néanmoins une armature, on préfère que cette armature soit interne et noyée dans la matière formant l'élément.

L'expérience montre que l'on obtient, grâce à l'invention, les avantages suivants :
-homogénéité et uniformité pratiquement parfaites de la fluidisation,
-absence de colmatage aussi bien du dessus que du dessous de la grille,
-absence de déformation de la surface de la grille qui reste parfaitement lisse,
-absence d'entretien qui peut se limiter à un simple nettoyage, s'il y a lieu, pour éliminer les grosses particules.

D'autres avantages et caractéristiques de l'invention apparaîtront à la lecture de la description suivante, faite à titre d'exemple non limitatif et se référant au dessin annexé dans lequel :

la figure 1 représente une vue en coupe d'une forme de réalisation non préférée d'une grille selon l'invention avec une armature;

la figure 2 représente une vue en coupe d'une grille selon une forme de réalisation préférée de l'invention;

la figure 3 représente une vue de dessus de cette grille;

la figure 4 représente une vue en coupe d'une grille selon une variante de cette forme de réalisation préférée de l'invention.

la figure 5 représente une vue en coupe d'une grille selon une autre forme de réalisation préférée de l'invention;

la figure 6 représente une vue en coupe d'une grille selon une variante de cette autre forme de réalisation;

la figure 7 représente une vue en coupe d'une grille selon une autre variante de cette autre forme de réalisation.

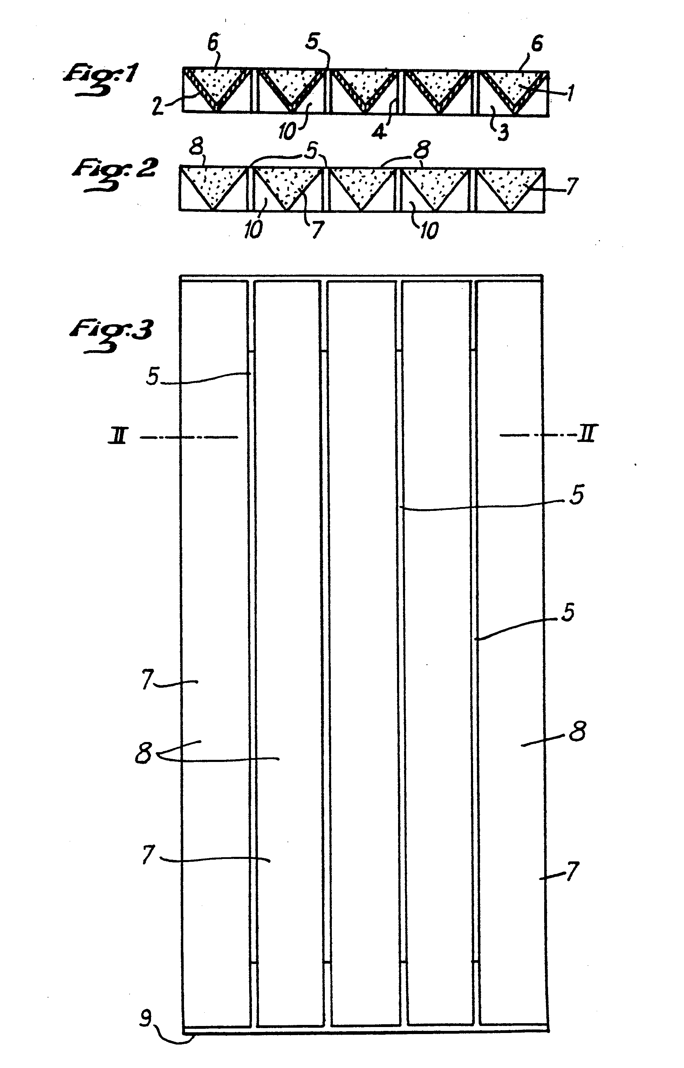

On se réfère tout d'abord la figure 1.

La grille représentée est constituée d'une pluralité d'éléments allongés parallèles 1. Ces éléments ont une section en V comme on le voit sur la figure 1. L'élément 1 comporte une armature 2 formée d'un fer cornière dont la pointe ou sommet est orienté vers le bas. L'espace situé entre les deux ailes de l'armature 2 est rempli de résine conformément à l'invention. Des éléments de support 3 portant des fers de support 4 sont disposés aux deux extrémités de la grille pour soutenir les éléments 1. La disposition est telle qu'entre deux éléments consécutifs on trouve un passage d'air 5 dont la largeur est en général de l'ordre de 1 mm au minimum.

Le matériau remplissant l'armature 2 et formant l'essentiel de l'élément 1 est, à titre d'exemple, une résine vendue par la société française HAVAS INDUSTRIE demeurant 541 X GARONOR -93619 AULNAY SOUS BOIS. Cette résine est chargée de particules de silice, carbonate et céramique.

Cette charge possède des particules de tailles différentes dont la granulométrie s'étage entre 20 µ et 1500 µ.

La surface supérieure 6 de chaque élément 1, provenant de coulée est parfaitement lisse. La dureté est de 9 mohs.

Dans une variante de cette forme de réalisation, les armatures 2 peuvent elles-mêmes être recouvertes d'une couche de résine ayant une épaisseur de préférence au moins égale à 2 mm.

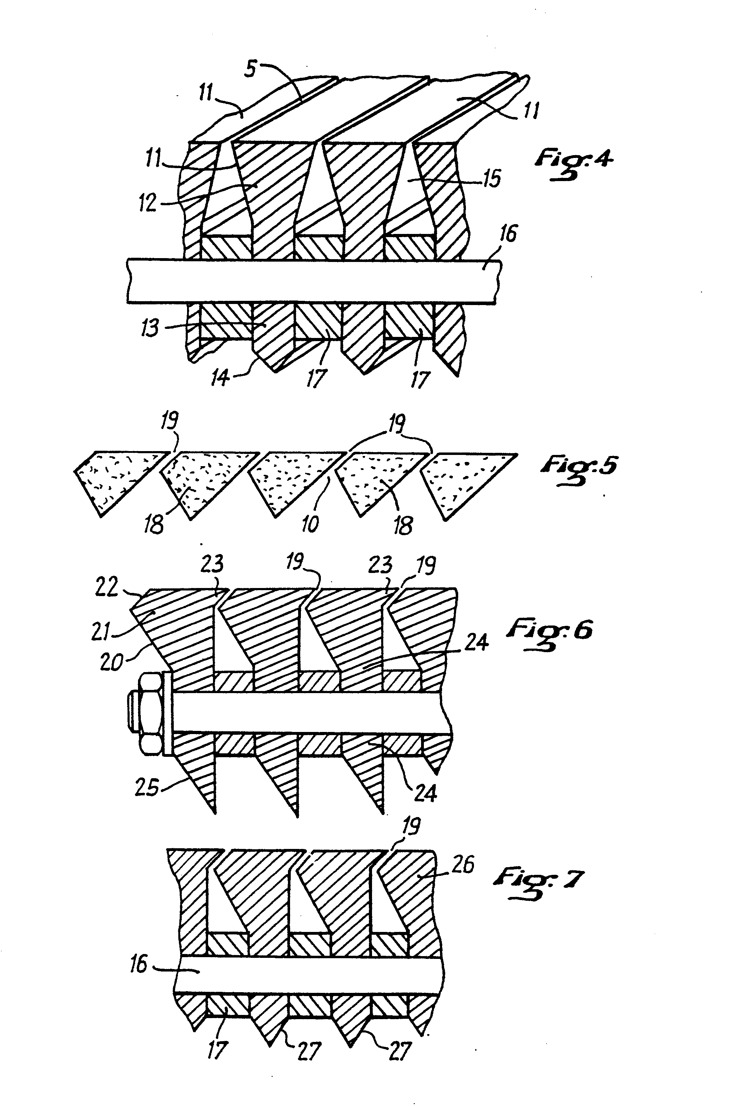

On se réfère maintenant aux figures 2 et 3.

La grille que l'on voit en section transversale est composée d'éléments 7 de forme triangulaire possédant une surface supérieure 8 parfaitement lisse analogue à la surface 6 des éléments précédents. Les éléments sont également réalisés à partir de la résine R C 14, chargée de silice + carbonate + céramique de granulométrie de 20 à 1500 µ.

La grille ne comporte plus aucun élément métallique.

Les éléments 7 sont supportés en leurs deux extrémités, par des pièces ou traverses d'un cadre qui les maintiennent dans leurs positions respectives dans lesquelles les éléments 7 sont séparés par des espaces 5 de l'ordre de 1 à quelques mm, les surfaces 8 étant toutes alignées dans un même plan horizontal. Les pièces ou traverses 9 sont, de préférence, réalisées dans le même matériau que les éléments 7.

Les espaces 10 qui se trouvent disposés entre deux éléments successifs, et qui aboutissent aux passages 5 ou 9 assurent une canalisation parfaite des flux d'air et empêchent une répartition anarchique. On évite ainsi la formation de cratères de granulométrie dans le lit fluidisé et on assure une homogénéité parfaite de ce lit, les flux d'air étant canalisés.

Aucune déformation différentielle de la grille ne se produit sous l'effet des variations de température et le lit conserve donc constamment ses qualités et reste homogène.

En se référant à la figure 4 on voit une variante particulièrement avantageuse dans laquelle on utilise des éléments 11 réalisés dans le même matériau que les éléments 7. Ces éléments 11 présentent une partie supérieure 12 de section trapézoïdale et une partie inférieure 13 droite se terminant par une extrémité triangulaire 14. On obtient ainsi, entre deux éléments 11 consécutifs, des passages 15 qui assurent un guidage et un équilibrage parfaits du flux de gaz vers les passages 5. Les parties 14 peuvent avantageusement présenter, notamment vers les deux extrémités des éléments, des trous transversaux traversés par des tiges 16 sur lesquelles sont enfilées des entretoises d'écartement 17, de forme, par exemple, annulaire et de préférence dans le même matériau. L'épaisseur de ces entretoises 17 détermine la largeur des passages 5 et l'on obtient ainsi une grille de lit fluidisé facilement démontable et dont la largeur des passages 5 peut être déterminée par le simple choix des cales ou entretoises 17.

On se réfère maintenant à la figure 5.

Sur cette figure, on voit des éléments 18 analogues aux éléments 7, et réalisés dans le même matériau, à l'exception du fait que l'un des coins supérieurs de la section triangulaire est tronqué de façon à déterminer, avec la surface correspondante de l'élément 18 voisin, un passage 19 cette fois-ci incliné, ce qui détermine, dans le lit fluidisé une composante transversale par rapport à la direction des éléments 19, composante qui assure le transfert progressif des particules traitées dans le lit et autorise un fonctionnement en continu du lit.

En se référant à la figure 6, on voit une variante dans laquelle les éléments 18 sont remplacés par des éléments 20 présentant une partie supérieure 21 dont l'un des côtés est vertical et l'autre s'évase vers le haut pour se terminer par une troncature 22 qui coopère avec un évasement 23 du côté vertical pour former un passage oblique 19. La partie 21 se poursuit vers le bas par une partie droite 24 moins épaisse qui se termine par une partie triangulaire pointue 25, le côté droit des éléments 20 restant entièrement vertical à l'exception du court évasement supérieur 23. Le montage des éléments et le réglage de la largeur des passages 19 peuvent être assurés par des tiges et entretoises analogues aux tiges et entretoises 16 et 17.

En se référant à la figure 7, on voit une variante dans laquelle les éléments 26 diffèrent des éléments 20 par une extrémité inférieure pointue 27 en forme de triangle isocèle.

A titre d'exemple, les éléments 7, 11, 18, 20 et 26 peuvent être réalisés de la façon suivante:

On réalise un noyau d'élément dont la section est homothétique de la section de l'élément et ayant une section inférieure de 33 % à celle de l'élément. Ce noyau est réalisé en stratifié époxy réalisé sur un modèle (en forme de V pour les éléments 7, 11) par réalisation d'un empilage de flans de tissu de fibres de carbone imprégnés par un liant composé d'une résine base, type RUTAPOX 0502 durci avec un durcisseur RUTAPOX NB vendus tous deux par la société Bakelite à Iserlohn, R.F.A.

Après polymérisation, le noyau est mis en place dans un moule dont l'empreinte a la forme de l'élément définitif et on injecte dans le moule une résine RC 14. La composition de la résine est :
-30% du liant époxy précité (0502 + NB)
-70% d'une charge composée de 20% de silice de granulométrie étagée entre 20 et 150 $\mu$, 5% de carbonate en lamelle et 75% de céramique de granulométrie étagée entre 40 et 1500 $\mu$.

Après durcissement, on démoule et on étuve à 60°C pendant 12 heures.

Bien que l'invention ait été décrite à propos d'une forme de réalisation particulière, il est bien entendu qu'elle n'y est nullement limitée et qu'on peut lui apporter diverses modifications de forme ou de matériau sans pour cela s'éloigner ni de son cadre ni de son esprit.

## Revendications

1. Grille de lit fluidisé, caractérisé en ce qu'elle est constituée à base d'un matériau synthétique de type résine, possédant une surface non usinée parfaitement lisse, et une dureté supérieure à 7 mohs.

2. Grille selon la revendication 1, caractérisée en ce qu'elle est constituée d'un matériau synthétique structuré et/ou chargé.

3. Grille selon l'une quelconque des revendications 1 et 2, caractérisée en ce que la résine est de type bisphénol A et/ou bisphénol F, ou novolac époxydée et cycloaliphatique ou leurs mélanges.

4. Grille selon l'une quelconque des revendications 1 à 3, caractérisée en ce qu'elle est réalisée à partir d'éléments préimprégnés ou stratifiés de fibres, notamment de carbone, de bore, de verre ou d'aramide.

5. Grille selon la revendication 2, caractérisée en ce qu'elle est chargée d'une charge à granulométrie étagée comprise entre 20 μ et 1500 μ.

6. Grille de lit fluidisé, caractérisée en ce qu'elle est constituée principalement, notamment totalement, d'une céramique possédant une tenue en température allant jusqu'à 1000°C et au-delà.

7. Grille selon l'une quelconque des revendications 1 à 6, caractérisée en ce qu'elle est réalisée sous forme d'éléments parallèles présentant une paroi supérieure horizontale et des parois latérales qui convergent l'une vers l'autre vers le bas, notamment à la façon d'un triangle (7,11) ou d'un Y - (18,20,26).

8. Grille selon l'une quelconque des revendications 1 à 7, caractérisée en ce que les éléments de grille présentent entre eux des passages (19) obliques obtenus en tronquant l'un des bords d'un élément (18, 20, 26).

9. Grille selon l'une quelconque des revendications 1 à 8, caractérisée en ce que les éléments comprennent une armature inférieure (2).

10. Grille selon la revendication 9, caractérisée en ce que ladite armature est revêtue de résine.

11. Grille selon l'une quelconque des revendications 1 à 8, caractérisée en ce que les éléments comprennent un noyau.

12. Grille selon l'une des revendications 7 et 8, caractérisée en ce que les éléments, ayant une forme de Y, (18, 20, 26), possèdent une partie supérieure, élargie (12, 21), une partie inférieure droite (13, 24) et une extrémité inférieure (14, 25, 27) pointue.

13. Grille selon l'une quelconque des revendications 1 à 12, caractérisée en ce qu'elle est constituée d'éléments parallèles dont les extrémités sont traversées par des tiges (16) avec interposition d'éléments d'entretoisement (17).

14. Grille selon la revendication 13, caractérisée en ce que les éléments d'entretoisement (17) sont réalisés dans un matériau similaire à celui des éléments.

Fig:1

Fig:2

Fig:3

0 222 953

Fig. 4

Fig. 5

Fig. 6

Fig. 7

Office européen
des brevets

RAPPORT DE RECHERCHE EUROPEENNE

Numéro de la demande
EP 85 40 2136

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | <u>FR - A - 2 267 812</u> (RHONE-PROGIL)<br><br>* page 1, lignes 1-7; page 2, lignes 2-10; page 3, lignes 2,3; page 4, lignes 3-22; figures 4-8 * | 1,7,12 | B 01 J 8/44 |
| A | | .6 | |
| | -- | | |
| Y | <u>FR - A - 1 301 548</u> (FAWKHAM DEVELOPMENTS)<br><br>* page 1, colonne 1, alinéa 1; page 1, colonne 1, alinéa 4 - colonne 2, alinéa 1; page 1, colonne 2, alinéa 7 - page 2, colonne 1, alinéa 3; figures 1,2 * | 1,7,12 | |
| | -- | | |
| A | <u>US - A - 2 843 592</u> (M. LUDWIG et al.)<br><br>* figures 1,3; colonne 3, ligne 6 - colonne 4, ligne 1 * | | |

------------

|  | DOMAINES TECHNIQUES RECHERCHES (Int. Cl.4) |
|---|---|
| | B 01 D<br>B 01 J<br>F 26 B |

XXXXXXXXXXXXXXXXXXXXXXXXXXXXXXXXXXXXXXXXXXXXXXXXX

| Lieu de la recherche | Date d'achevement de la recherche | Examinateur |
|---|---|---|
| LA HAYE | 03-07-1986 | SIEM |

Office européen
des brevets

## REVENDICATIONS DONNANT LIEU AU PAIEMENT DE TAXES

La présente demande de brevet européen comportait lors de son dépôt plus de dix revendications.

☐ Toutes les taxes de revendication ayant été acquittées dans les délais prescrits, le présent rapport de recherche européenne a été établi pour toutes les revendications.

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées.

à savoir les revendications:

☐ Aucune taxe de revendication n'ayant été acquittée dans les délais prescrits, le présent rapport de recherche européenne a été établi pour les dix premières revendications.

## X ABSENCE D'UNITE D'INVENTION

La division de la recherche estime que la présente demande de brevet européen ne satisfait pas à l'exigence relative à l'unité d'invention et concerne plusieurs inventions ou pluralités d'inventions.
à savoir:

1. revendications 1-5,7-14: grille de lit fluidisé en matériau plastique

2. revendication 6: grille de lit fluidisé en matériau céramique

☐ Toutes les nouvelles taxes de recherche ayant été acquittées dans les délais impartis, le présent rapport de recherche européenne a été établi pour toutes les revendications.

☐ Une partie seulement des nouvelles taxes de recherche ayant été acquittée dans les délais impartis, le présent rapport de recherche européenne a été établi pour les parties de la demande de brevet européen qui se rapportent aux inventions pour lesquelles les taxes de recherche ont été acquittées

à savoir les revendications:

☒ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications.

à savoir les revendications: 1-5,7-14